# EUROPÄISCHE PATENTSCHRIFT

(11) **EP 2 920 496 B1**
(45) Veröffentlichungstag und Bekanntmachung des Hinweises auf die Patenterteilung: **20.07.2016**
(21) Anmeldenummer: 13789185.9
(22) Anmeldetag: 07.11.2013
(51) Int. Cl.: F16J 15/38, F16J 15/34

(54) **GLEITRINGDICHTUNGSANORDNUNG MIT VERBESSERTER NEBENDICHTUNG**
MECHANICAL SEAL ARRANGEMENT HAVING AN IMPROVED SECONDARY SEAL
SYSTÈME D'ÉTANCHÉITÉ À BAGUES DE GLISSEMENT MUNI D'UN JOINT D'ÉTANCHÉITÉ SECONDAIRE AMÉLIORÉ

(30) Priorität: 15.11.2012 DE 102012022465
(43) Veröffentlichungstag der Anmeldung: 23.09.2015
(73) Patentinhaber: EagleBurgmann Germany GmbH & Co. KG, 82515 Wolfratshausen (DE)
(72) Erfinder: OTSCHIK, Joachim, 82547 Beuerberg (DE); DRÖSCHER, Peter, 82538 Geretsried (DE); FESL, Andreas, 83624 Otterfing (DE); HOLZAPFEL, Thomas, 82404 Sindelsdorf (DE); LANG, Klaus, 82547 Beuerberg (DE); LEDERER, Günther, 82538 Geretsried (DE); PHILIPPI, Petia, 82515 Wolfratshausen (DE); SCHICKTANZ, Rudolf, 82538 Geretsried (DE); SCHRÜFER, Andreas, 82515 Wolfratshausen (DE); VOGEL, Berthold, 71701 Schwieberdingen (DE)
(74) Vertreter: Hoefer & Partner Patentanwälte mbB
(86) Internationale Anmeldenummer: PCT/EP2013/003353
(87) Internationale Veröffentlichungsnummer: WO 2014/075779

(56) Entgegenhaltungen:
- DE-U1- 20 217 983
- DE-U1- 29 505 251
- DE-U1-202007 012 050
- DE-U1-202008 011 032
- US-A- 5 700 013

## Beschreibung

Die vorliegende Erfindung betrifft eine Gleitringdichtungsanordnung mit einer verbesserten Nebendichtung.

Ein Problemkreis bei bekannten Gleitringdichtungsanordnungen sind Nebendichtungen, welche häufig an einer Rückseite, d. h. einer dem Dichtspalt entgegengesetzten Seite eines Gleitrings, eine Abdichtung vornehmen sollen. Hierbei müssen die Nebendichtungen axial beweglich gehalten werden, um insbesondere auch axiale Verschiebungen zwischen Welle und Gehäuse bei einem Stillstand oder Langsam-Lauf einer Maschine auszugleichen und eine Abdichtung zu gewährleisten. Aufgrund der üblicherweise im Betreib der Gleitringdichtungsanordnung herrschenden hohen Drücke und hohen Temperaturen verformen sich die Nebendichtungen plastisch, was dann bei einem Stillstand der Maschine zu einem unerwünschten Aufschrumpfen der Nebendichtung auf ein hülsenartiges Bauteil aufgrund einer Temperaturreduzierung und einer Druckreduzierung führen kann. Dadurch kann jedoch die axiale Beweglichkeit der Nebendichtung reduziert werden und bei Stillstand bzw. bei einer Wiederinbetriebnahme der Maschine eine Leckage zwischen den beiden Gleitringen auftreten oder eine Leckage an der Rückseite des Gleitrings, an der die Nebendichtung angeordnet ist, auftreten. Aus der DE 20 2007 017 783.6 U1 ist eine Gleitringdichtungsanordnung bekannt, bei der zwischen einer Nebendichtung und einem Gleitring ein Stützring lose angeordnet ist, um auch bei hohen Temperaturen und insbesondere bei hohen mechanischen Beanspruchungen mögliche Scherbeanspruchungen zwischen den Teilen aufgrund unterschiedlicher Wärmedehnungen der Bauteile zu vermeiden. Ferner ist hierbei zwischen dem Stützring und der Nebendichtung eine folienartige Zwischenlage aus PEEK angeordnet. Diese folienartige Zwischenlage soll ebenfalls ungünstige Auswirkungen aufgrund unterschiedlicher Wärmeausdehnungskoeffizienten auf den Gleitring bzw. die Nebendichtung verhindern. Weiterhin zeigt die DE 20 2008 011 032 U1 eine Gleitringdichtungsanordnung gemäß dem Oberbegriff des Anspruchs 1.

Es ist daher Aufgabe der vorliegenden Erfindung, bei einfachem Aufbau und einfacher, kostengünstiger Herstellbarkeit eine Gleitringdichtungsanordnung mit Nebendichtungseinrichtung bereitzustellen, welche in allen Betriebszuständen, insbesondere bei oder nach einem Stillstand, eine sichere und leckagefreie Abdichtung ermöglicht.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 weist somit den Vorteil auf, dass auch bei einem Stillstand oder Langsam-Lauf oder Wiederanfahren eine ausreichende axiale Bewegbarkeit der Nebendichtung sichergestellt ist. Insbesondere kann erfindungsgemäß verhindert werden, dass die Nebendichtungseinrichtung nach einem Abkühlen auf einem rohrförmigen Bauteil festsitzt bzw. auf dieses aufgeschrumpft wird, was die axiale Bewegbarkeit der Nebendichtungseinrichtung verhindern würde. Dies wird erfindungsgemäß dadurch erreicht, dass die Nebendichtungseinrichtung einstückig mit einem Ringelement (Ringelementteil) und einer Nebendichtung (Nebendichtungsteil) ausgebildet ist. Das Ringelement ist dabei an einer Seite der Nebendichtung angeordnet, welche zum stationären Gleitring hin gerichtet ist. Die Nebendichtung und das Ringelement sind dabei aus unterschiedlichen Materialien gebildet und weisen zwischen sich eine unlösbare Verbindung auf, um die einstückige Nebendichtungseinrichtung bereitzustellen. Durch die Fixierung des Ringelements an der Nebendichtung zu einem einzigen Bauteil kann erfindungsgemäß somit die axiale Bewegbarkeit der Nebendichtungseinrichtung aufrechterhalten werden. Ferner stellt das Ringelement einen Abstand in Axialrichtung zwischen dem Gleitring und der Nebendichtung bereit, sodass insbesondere auch ein mögliches, während des Betriebs auftretendes Extrudieren, d. h. Hineinziehen von Material der Nebendichtung in einen Spalt zwischen dem Gleitring und dem rohrförmigen Bauteil, vermieden werden kann. Ferner umfasst die Gleitringdichtungsanordnung eine Vorspanneinrichtung zur Vorspannung der Nebendichtungseinrichtung in Axialrichtung. Die Vorspanneinrichtung umfasst einen Druckring und ein Vorspannelement, vorzugsweise mehrere über den Umfang verteilte Federn, wobei der Druckring an der Nebendichtung anliegt. Weiter übergreift der Druckring die Nebendichtung der Nebendichtungseinordnung zumindest teilweise in Axialrichtung. Hierdurch kann insbesondere die Nebendichtungseinrichtung auch bei starken Temperaturschwankungen zusätzlich noch durch den Druckring in Position gehalten werden. Der Druckring liegt dabei nur lose an der Nebendichtungseinrichtung an. Alternativ oder zusätzlich untergreift der Druckring einen Teil der Nebendichtung in Axialrichtung mittels einer axialen Auskragung. Hierdurch wird die Nebendichtung durch den Druckring in Position gehalten und es kann einer Aufschrumpfungstendenz der Nebendichtung entgegengewirkt werden. Besonders bevorzugt übergreift und untergreift der Druckring einen Teil der Nebendichtung. Alternativ oder zusätzlich hintergreift der Druckring die Nebendichtung mittels eines hintergreifenden Bereichs.

Vorzugsweise ist die Verbindung zwischen der Nebendichtung und dem Ringelement eine mittels thermischer Verfahren hergestellte Verbindung, insbesondere eine Sinterverbindung. Die Sinterverbindung stellt eine unlösbare Verbindung zwischen der Nebendichtung und dem Ringelement bereit und kann besonders einfach und kostengünstig hergestellt werden. Beispielsweise können körnige oder pulverförmige Stoffe für die Nebendichtung und das Ringelement in eine Form eingebracht werden und gemeinsam gesintert werden, oder alternativ wird das Ringelement auf die schon hergestellte Nebendichtung aufgesintert, oder die Nebendichtung auf das Ringelement aufgesintert. Weiter bevorzugt sind alternativ auch mit anderen Verfahren hergestellte Nebendichtungseinrichtungen möglich, z.B. als einstückiges Spritzgussteil aus wenigstens zwei verschiedenen Materialien oder mit Verfahren des rapid prototyping, z:B. mittels Lasersintern, wobei insbesondere die Nebendichtungseinrichtung schnell und kostengünstig durch schichtweisen Aufbau herstellbar ist. Weiter alternativ ist die Verbindung zwischen Nebendichtung und Ringelement eine Klebeverbindung.

Gemäß einer weiteren bevorzugten Ausgestaltung der Erfindung umfasst das Ringelement der Nebendichtungseinrichtung einen in Axialrichtung verlaufenden Ringfortsatz. Dieser Ringfortsatz übergreift die Nebendichtung, vorzugsweise an einem radial äußersten Bereich, in Axialrichtung zumindest teilweise. Hierdurch kann sichergestellt werden, dass das Ringelement vorzugsweise über die gesamte radiale Höhe der Nebendichtung verläuft und zusätzlich noch die Nebendichtung in Axialrichtung übergreift. Hierdurch können insbesondere möglicherweise auftretende Verkippungskräfte, welche zu einem Verkippen des stationären Gleitrings führen würden, verhindert werden.

Gemäß einer alternativen Ausgestaltung der vorliegenden Erfindung weist die Nebendichtung der Nebendichtungseinrichtung an der zum stationären Gleitring gerichteten Seite einen in Axialrichtung vorstehenden Absatz auf. Weiterhin weist das Ringelement einen in Axialrichtung verlaufenden Ringfortsatz auf, welcher den vorstehenden Absatz der Nebendichtung übergreift.

Weiter bevorzugt ist die Verbindung am gesamten Kontaktbereich zwischen der Nebendichtung und dem Ringelement ausgebildet. Dies stellt eine sichere Verbindung zwischen den beiden Bauteilen dar, sodass die Nebendichtungseinrichtung als einstückiges Bauteil eine hohe Lebensdauer aufweist. Weiterhin können Scherkräfte sehr sicher übertragen werden.

Vorzugsweise umfasst das Ringelement einen Hochleistungskunststoff, insbesondere PEEK oder PEK oder PEKEKK.

Besonders bevorzugt umfasst die Nebendichtung PTFE und das Ringelement PEEK. Durch die Wahl von vorzugsweise PEEK als Material für das Ringelement wird sichergestellt, dass im Falle einer Temperaturreduzierung aufgrund der festen Verbindung zwischen dem PEEK-Ringelement und der PTFE-Nebendichtung der Druckring einer Aufschrumpfungstendenz der PTFE-Nebendichtung und des PEEK-Ringelements entgegenwirkt. Somit kann eine mögliche Schrumpfkraft auf das PEEK-Ringelement und die PTFE-Nebendichtung reduziert werden und ein Aufschrumpfen auf ein rohrförmiges Bauteil vermieden werden, sodass die axiale Beweglichkeit der Nebendichtungseinrichtung immer aufrechterhalten bleibt. Ferner kann durch das härtere PEEK-Ringelement eine Extrusion der weicheren PTFE-Nebendichtung in den Spalt zwischen dem rohrförmigen Bauteil und dem stationären Gleitring verhindert werden. Somit ermöglicht die Verwendung eines extrusionsstabilen Materials für das Ringelement auch eine Verkleinerung dieses Spaltes zwischen dem stationären Gleitring und dem rohrförmigen Bauteil. Alternativ können als Material für das Ringelement ein Materialgemisch, umfassend PEEK, und für die Nebendichtung ein Materialgemisch, umfassend PTFE, verwendet werden.

Vorzugsweise weist das Ringelement der Nebendichtungseinrichtung an einer zu einem rohrförmigen Bauteil gerichteten Seite eine Länge L1 auf, und die Nebendichtung weist in Axialrichtung an einer zu einem rohrförmigen Bauteil gerichteten Seite eine Länge L2 auf, wobei die Länge L2 mindestens dabei doppelt so groß, und vorzugsweise drei Mal so groß, ist wie die Länge L1. Besonders bevorzugt ist dabei die Länge L1 in einem Bereich von 0,1 mm bis 2 mm, vorzugsweise zwischen 0,4 mm und 0,8 mm.Bevorzugt liegt die axiale Länge L2 der Nebendichtung in einem Bereich 2 mm bis 12 mm, insbesondere von 4 mm bis 10 mm, und vorzugsweise zwischen 3 mm und 8 mm, und bevorzugt 3 mm und 6 mm. Weiter bevorzugt beträgt eine Gesamtlänge L3 der einstückigen Nebendichtungseinrichtung maximal 14 mm. Mit anderen Worten ist eine Summe der Längen L1 + L2 maximal 14 mm.

Gemäß einer weiteren bevorzugten Ausgestaltung der Erfindung ist zwischen der Nebendichtungseinrichtung und dem Druckring eine formschlüssige Verbindung vorgesehen. Die formschlüssige Verbindung ist dabei insbesondere zwischen der Nebendichtung und dem Druckring ausgebildet. Besonders bevorzugt ist dabei die Nebendichtungseinrichtung derart am Druckring angeordnet, dass die Nebendichtungseinrichtung am Druckring, d.h., der Druckring einen Teil der Nebendichtungseinrichtung untergreift, aufgehängt ist, sodass insbesondere auch der unerwünschte Aufschrumpfungsprozess bei einem Abkühlen der Nebendichtungseinrichtung durch diese Maßnahme noch unwahrscheinlicher wird, da der Druckring die Nebendichtungseinrichtung zurückhält. Besonders bevorzugt ist die formschlüssige Verbindung zwischen der Nebendichtungseinrichtung und dem Druckring durch eine ringförmige Verankerung gebildet, wobei vorzugsweise die Nebendichtung einen ringförmigen vorstehenden Bereich aufweist, welcher in einer ringförmigen Nut im Druckring aufgenommen ist.

Weiter bevorzugt ist die Gleitringdichtungsanordnung eine Gasdichtung zur Abdichtung eines gasförmigen Mediums. Alternativ bevorzugt ist die Gleitringdichtungsanordnung eine Flüssigkeitsdichtung zur Abdichtung eines flüssigen Mediums oder eines Gas-Flüssigkeitsgemisches.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Schnittansicht einer Gleitringdichtungsanordnung gemäß einem ersten Ausführungsbeispiel der Erfindung,
- Fig. 2: eine vergrößerte Ansicht einer Nebendichtungseinrichtung von Figur 1,
- Fig. 3: eine schematische Schnittansicht einer Gleitringdichtungsanordnung gemäß einem zweiten Ausführungsbeispiel der Erfindung,
- Fig. 4: eine schematische Schnittansicht einer Gleitringdichtungsanordnung gemäß einem dritten Ausführungsbeispiel der Erfindung,
- Fig. 5: eine schematische Schnittansicht einer Gleitringdichtungsanordnung gemäß einem vierten Ausführungsbeispiel der Erfindung,
- Fig. 6: eine vergrößerte Darstellung einer Nebendichtungseinrichtung von Fig. 5, und
- Fig. 7 bis 10: weitere bevorzugte Alternativen der erfindungsgemäßen Nebendichtungseinrichtung.

In den nachfolgend beschriebenen Ausführungsbeispielen sind gleiche bzw. technisch funktional gleiche Bauteile mit den gleichen Bezugszeichen bezeichnet.

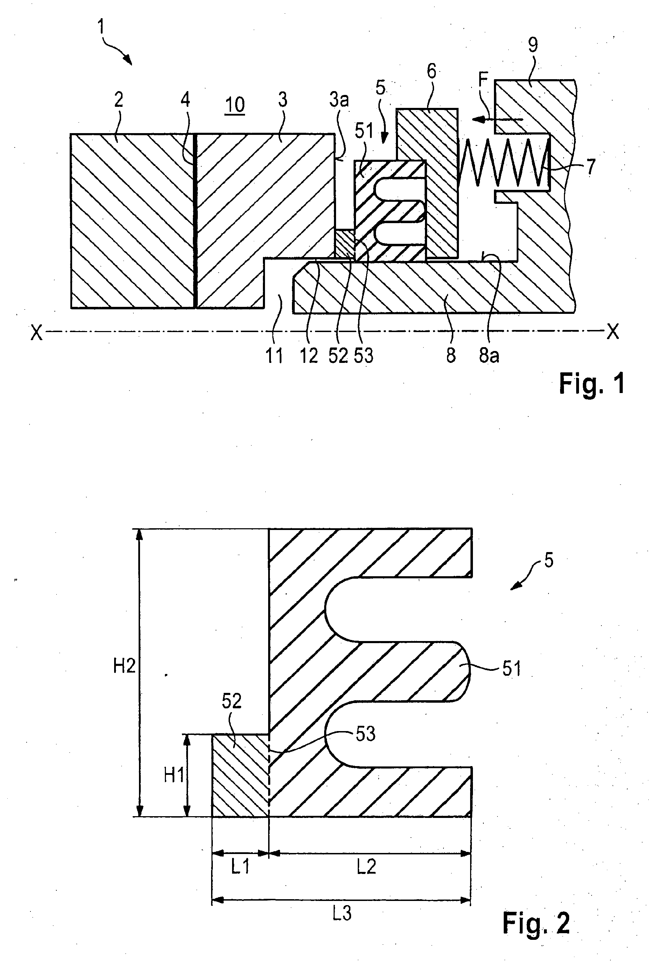

Nachfolgend wird unter Bezug nun mehr auf die Figuren 1 und 2 eine Gleitringdichtungsanordnung 1 gemäß einem ersten Ausführungsbeispiel der Erfindung im Detail beschrieben.

Wie aus Figur 1 ersichtlich ist, umfasst die Gleitringdichtungsanordnung 1 einen rotierenden Gleitring 2 und einen stationären Gleitring 3, welche zwischen sich in bekannter Weise einen Dichtspalt 4 bilden. Der rotierende Gleitring 3 ist mit einem rotierenden Bauteil (nicht gezeigt), wie z. B. einer Welle verbunden. Bei der in Figur 1 gezeigten Gleitringdichtungsanordnung 1 handelt es sich um eine sogenannte Gasdichtung, welche ein unter Druck stehendes Gas in einem Druckbereich 10 von einem Atmosphärenbereich 11 abdichtet.

Die Gleitringdichtungsanordnung 1 umfasst ferner eine einstückige Nebendichtungseinrichtung 5 mit einem separaten Druckring 6. Die Nebendichtungseinrichtung 5 umfasst die eigentliche Nebendichtung 51 sowie ein mit der Nebendichtung 51 unlösbar verbundenes Ringelement 52. In diesem Ausführungsbeispiel sind die Nebendichtung 51 und das Ringelement 52 aus verschiedenen Sintermaterialien hergestellt, sodass zwischen der Nebendichtung 51 und dem Ringelement 52 eine Sinterverbindung 53 gebildet ist. Diese Sinterverbindung 53 ist unlösbar, um die einstückige Nebendichtungseinrichtung zu bilden. Erfindungsgemäß wird hierbei unter dem Begriff "unlösbar" eine Verbindung verstanden, welche lediglich durch Zerstörung gelöst werden kann. Als Sintermaterialien werden in diesem Ausführungsbeispiel für die Nebendichtung 51 PTFE und für das Ringelement 52 PEEK verwendet oder Gemische mit diesen Materialien.

Wie insbesondere aus Figur 2 ersichtlich ist, ist dabei eine Länge L1 in Axialrichtung X-X des Ringelementes 52 ungefähr dreimal kleiner als eine Länge L2 der Nebendichtung 51 in Axialrichtung. Eine Gesamtlänge L3 = L1 + L2 ist ≤ 14 mm. Ferner ist eine radiale Höhe H2 der Nebendichtung 51 mindestens doppelt so groß wie eine radiale Höhe H1 des Ringelements 52 (vergleiche Figur 2).

Die Gleitringdichtung 1 umfasst ferner eine Vorspanneinrichtung mit einem Vorspannelement 7, in diesem Ausführungsbeispiel eine Feder. Das Vorspannelement 7 übt eine Vorspannkraft F in Axialrichtung auf den separaten Druckring 6 aus, welche die Vorspannkraft über die einstückige Nebendichtungseinrichtung 5 auf den stationären Gleitring 3 überträgt. Hierdurch soll bei einem Stillstand oder beim An- oder Abfahren der Maschine verhindert werden, dass Medium über den Dichtspalt 4 vom Druckbereich 10 in den Atmosphärenbereich 11 gelangt und somit der stationäre Gleitring 3 in Axialrichtung gegen den rotierbaren Gleitring 2 gedruckt wird.

Dabei muss die einstückige Nebendichtungseinrichtung 5 in allen Betriebszuständen an einem rohrförmigen Bauteil 8 eines Gehäuses 9 abdichten. Das rohrförmige Bauteil 8 weist eine Mantelabdichtfläche 8a auf, auf welcher die Nebendichtungseinrichtung 5 abdichtet. Im Betrieb dichtet hierbei die Nebendichtung 51 auf der Mantelabdichtfläche 8a ab und das Ringelement 52 dichtet an einem rückseitigen Bereich 3a des stationären Gleitrings 3 ab.

Die erfindungsgemäße einstückige Nebendichtungseinrichtung 5 ermöglicht es somit, ein einteiliges Bauteil aus zwei verschiedenen Materialien bereitzustellen. Hierbei stellt das Ringelement 52 insbesondere eine reduzierte radiale Reibkraft zum stationären Gleitring 3 bereit. Da das Ringelement 52 flächig über die Sinterverbindung 53 mit der Nebendichtung 51 verbunden ist, besteht auch insbesondere beim Stillstand bzw. der Abkühlung der Maschine eine reduzierte Gefahr, dass die einstückige Nebendichtungseinrichtung 5 auf das rohrförmige Bauteil aufgeschrumpft wird. Hierdurch kann insbesondere beim Stillstand bzw. beim Anfahren oder Abfahren verhindert werden, dass aufgrund eines auf dem rohrförmigen Bauteil 8 festsitzenden Nebendichtungseinrichtung 5 eine Leckage durch den Dichtspalt 4 zwischen den beiden Gleitringen auftritt, da der stationäre Gleitring 3 nicht die axiale Bewegung aufgrund der festsitzenden einstückigen Nebendichtungseinrichtung 5 ausführen kann. Ferner ermöglicht die Verwendung des Ringelements 52 aus einem unterschiedlichen Material als die Nebendichtung 51, dass verhindert wird, dass Material von der Nebendichtungseinrichtung 5 in den Spalt 12 zwischen dem stationären Gleitring 3 und dem rohrförmigen Bauteil 8 hineingezogen wird, was im Stand der Technik ein großes Problem hinsichtlich der Haltbarkeit der Nebendichtungen bildet. Vorzugsweise ist dabei die Länge L1 in Axialrichtung wenigstens zwei- bis dreimal größer als eine axiale Ausdehnung des Spalts 12.

Somit weist die vorliegende Erfindung im Vergleich zu den bisher bekannten Lösungen des Standes der Technik, welche jeweils eine Vielzahl von einzelnen separaten Ringen an der Nebendichtung verwendet, große Vorteile beim An- und Abfahren sowie beim Stillstand der Maschine auf. Auch eignet sich die erfindungsgemäße einstückige Nebendichtungseinrichtung 5 besonders zur Abdichtung von Medien mit hohen Drucken und hohen Temperaturen.

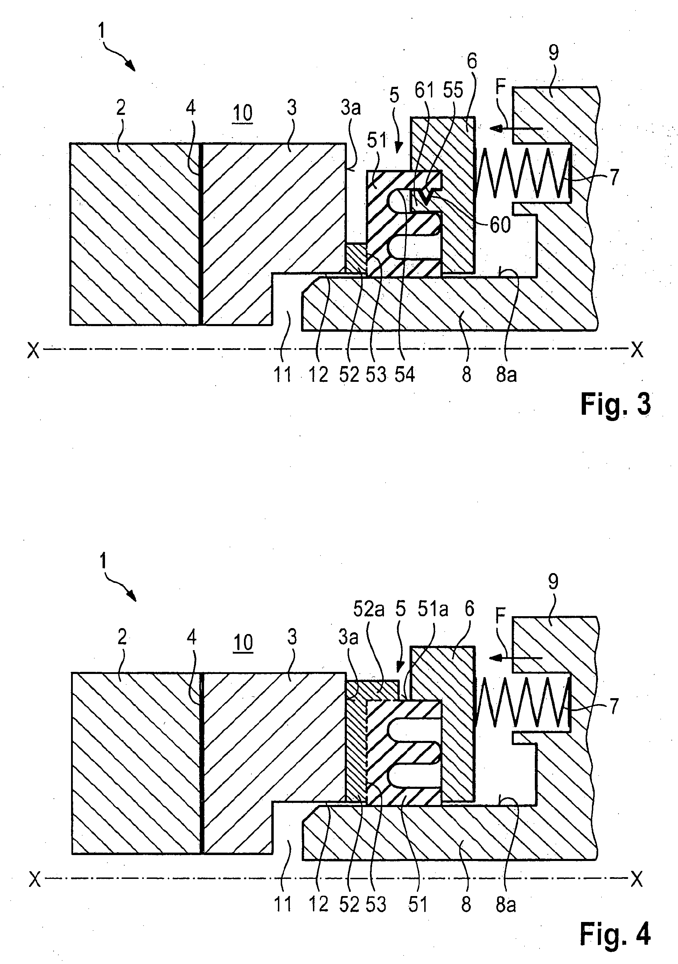

Figur 3 zeigt eine Gleitringdichtungsanordnung 1 gemäß einem zweiten Ausführungsbeispiel, welche im Wesentlichen dem ersten Ausführungsbeispiel entspricht. Im Unterschied zum ersten Ausführungsbeispiel weist die Gleitringdichtungsanordnung 1 des zweiten Ausführungsbeispiels zusätzlich eine aufgehängte einstückige Nebendichtungseinrichtung 5 auf. Hierzu weist die Nebendichtung 51 an einer dem stationären Gleitring 3 abgewandten Seite eine ringförmige Einbuchtung 54 auf, in welche eine axiale Auskragung 61 des Druckrings 6 vorsteht. Zwischen der Auskragung 61 und der Nebendichtung 51 ist dabei eine formschlüssige Verbindung vorhanden, welcher einen vorstehenden Bereich 55 an der Nebendichtung und eine ringförmige Ausnehmung 60 an der Auskragung 61 umfasst (vergleiche Figur 3). Die formschlüssige Verbindung weist dabei im Schnitt eine V-Form auf. Durch diese Maßnahme wird erreicht, dass die einstückige Nebendichtungseinrichtung 5 am Druckring 6 aufgehängt ist, bzw. der Druckring 6 einen Teil der Nebendichtungseinrichtung 5 untergreift, sodass insbesondere eine Tendenz zum Aufschrumpfen auf das rohrförmige Bauteil 8 während eines Stillstands der Maschine weiter reduziert wird.

Figur 4 zeigt eine Gleitringdichtungsanordnung 1 gemäß einem dritten Ausführungsbeispiel der Erfindung, welche im Wesentlichen dem ersten Ausführungsbeispiel entspricht. Im Unterschied zum ersten Ausführungsbeispiel ist beim dritten Ausführungsbeispiel die einstückige Nebendichtungseinrichtung 5 unterschiedlich gebildet. Wie aus Figur 4 ersichtlich ist, ist das Ringelement 52 in radialer Richtung größer als die Nebendichtung 51 und übergreift die Nebendichtung 51 an einem radial äußeren Umfang 51a mittels eines übergreifenden Bereichs 52a. Hierdurch ist insbesondere die Verbindung 53 zwischen der Nebendichtung 51 und dem Ringelement 52 auf einer größeren Fläche vorgesehen. Ferner reduziert die übergreifende Anordnung des Ringelements 52 an der Nebendichtung 51 eine insbesondere bei Temperaturänderungen auftretende Tendenz der Nebendichtung 51, sich in Richtung des Druckrings 6 zu verkippen, wodurch der Dichtspalt 4 zwischen den beiden Gleitringen 2, 3 in negativer Weise beeinflusst werden kann.

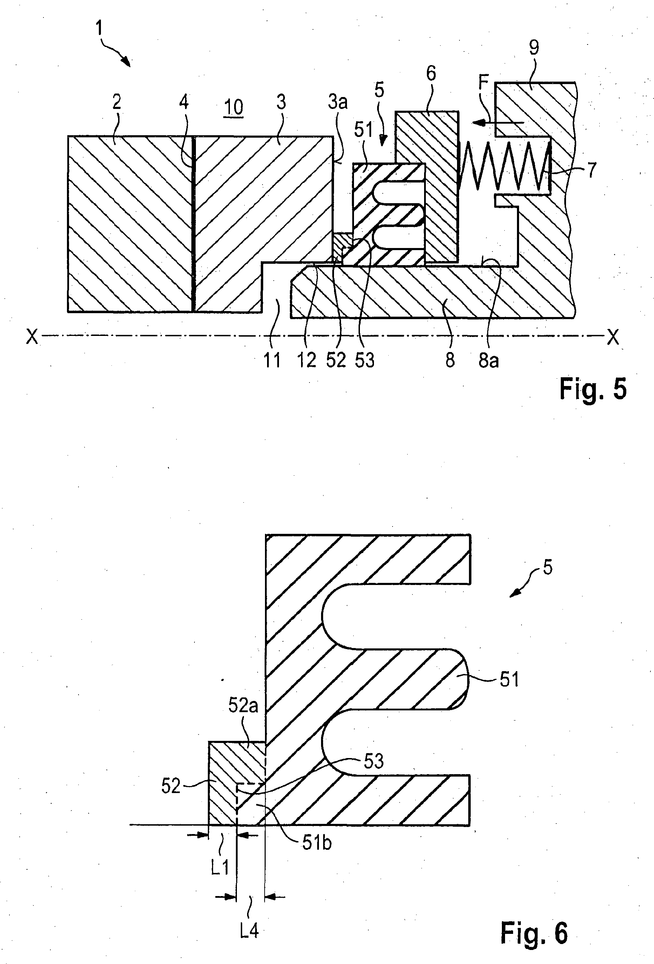

Die Figuren 5 und 6 zeigen eine Gleitringdichtungsanordnung 1 gemäß einem vierten Ausführungsbeispiel der Erfindung. Bei diesem Ausführungsbeispiel weist die Nebendichtung 51 einen in Axialrichtung X-X vorstehenden Absatz 51 b auf (vergleiche Figur 6). Das Ringelement 52 weist dabei wieder einen übergreifenden Bereich 52a auf und übergreift den Absatz 51 b. Auch hierdurch wird eine unerwünschte verkippende Bewegungstendenz der Nebendichtung 51 verringert. Wie insbesondere aus Figur 6 ersichtlich ist, ist hierbei eine axiale Länge L1 des Ringelements 52 im Bereich des rohrförmigen Bauteils 8 ungefähr gleich groß wie eine axiale Länge L4 des Absatzes 51 b in Axialrichtung X-X.

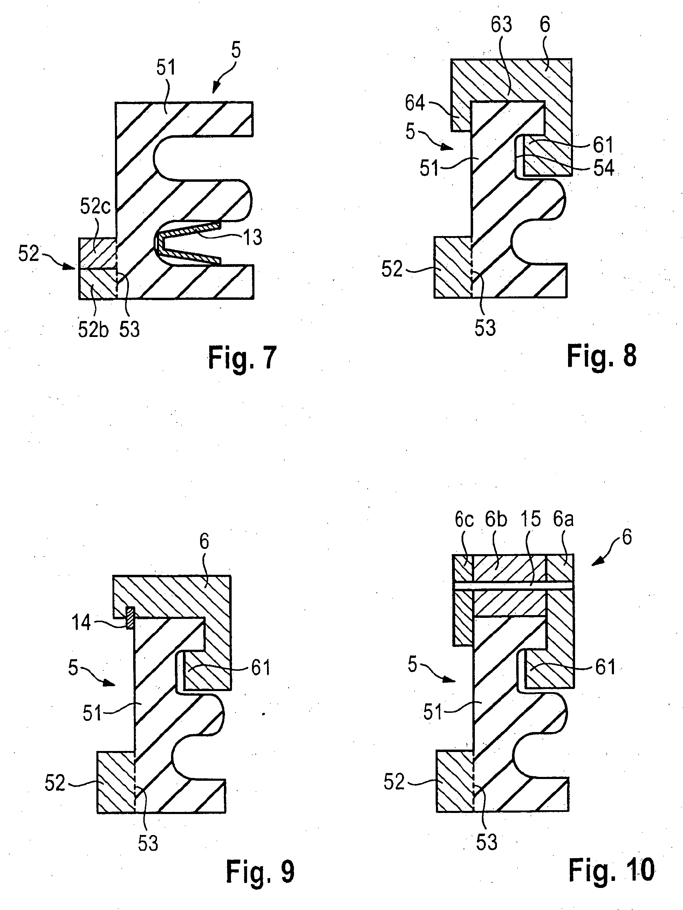

Die Fig. 7 bis 10 zeigen weitere bevorzugte Ausgestaltungen der erfindungsgemäßen Nebendichtungseinrichtung 5.

Fig. 7 zeigt eine bevorzugte Ausführungsform, bei der das Ringelement 52 einen mehrschichtigen Aufbau aufweist. In diesem Ausführungsbeispiel weist das Ringelement 52 einen zweischichtigen Aufbau auf mit einer ersten Schicht 52b und einer zweiten Schicht 52c auf. Es ist jedoch möglich, dass noch mehrere Schichten für das Ringelement 52 vorgesehen werden. Ferner weist die Nebendichtung 51 ein Aufspreizelement 13 auf, welches in einer entsprechend gebildeten Ausnehmung in der Nebendichtung 51 angeordnet ist. Die beiden in Fig. 8 dargestellten Schichten sind aus unterschiedlichen Materialien hergestellt, wobei vorzugsweise eine Härte der Schichten in radial äußerer Richtung abnimmt. D.h., die erste Schicht 52b ist härter als die zweite Schicht 52c. Beide Schichten 52b und 52c sind jedoch über die Sinterverbindung 53 mit der Nebendichtung 51 verbunden. Ferner ist noch ein Aufspreizelement 13 an der Nebendichtung 51 angeordnet, um ein sicheres Aufliegen der Nebendichtung 51 auf einem rohrförmigen Bauteil zu erreichen.

Fig. 8 zeigt eine weitere bevorzugte Alternative der vorliegenden Erfindung, wobei die Nebendichtungseinrichtung 5 mittels der Nebendichtung 51 am Druckring 6 aufgehängt ist. Hierzu weist der Druckring 6 eine axiale Auskragung 61 auf, welche in eine Einbuchtung 54 an der Nebendichtung 51 eingreift. Hierdurch ist die Nebendichtung an dem Druckring 6 aufgehängt. Der Druckring 6 umfasst ferner einen übergreifenden Bereich 63 und einen hintergreifenden Bereich 64. Dadurch ist der gesamte, in radial nach außen gerichteter Richtung gerichtete Bereich der Nebendichtung 51, vom Druckring 6 überdeckt (vgl. Fig. 8). Da der Druckring 6 sehr steif ist, wirkt somit diese bevorzugte Ausgestaltung insbesondere einem Verkippen der Nebendichtung 51 zusätzlich entgegen und verhindert ein Aufschrumpfen der Nebendichtungseinrichtung 5 unter einer Welle oder dgl..

Fig. 9 zeigt ein weiteres bevorzugtes Ausführungsbeispiel der Erfindung, welches im Wesentlichen dem von Fig. 8 ähnelt, wobei statt des hintergreifenden Bereichs 64 beim Ausführungsbeispiel in Fig. 9 ein Sicherungsring 14 am Druckring 6 angeordnet ist, welcher hinter die Nebendichtung 51 greift.

Das in Fig. 10 gezeigte weitere bevorzugte Ausführungsbeispiel zeigt eine weitere Alternative des hintergreifenden Druckrings 6, wobei der Druckring 6 von Fig. 10 mehrteilig ausgebildet ist. In diesem Ausführungsbeispiel umfasst der Druckring 6 drei Teile 6a, 6b, 6c, welche mittels eines Stiftes 15 miteinander verbunden sind. Hierdurch können insbesondere die Herstellungskosten für den Druckring 6 reduziert werden und die Nebendichtung 51 kann schnell und einfach am Druckring 6 montiert werden. Auch bei dem in Fig. 10 gezeigten Ausführungsbeispiel ist dabei die Nebendichtung 51 an der axialen Auskragung 61 aufgehängt.

Zu allen beschriebenen Ausführungsbeispielen sei angemerkt, dass insbesondere der Druckring 6 jeweils derart ausgebildet sein kann, dass die Nebendichtung 51 am Druckring 6 aufgehängt ist. Ferner kann der Druckring 6 bei allen beschriebenen Ausführungsbeispielen derart aufgebaut sein, dass er entweder die Nebendichtung 51 übergreift oder die Nebendichtung 51 vollständig hintergreift, wie in den Ausführungsbeispielen von Fig. 8 bis 10 gezeigt. Ferner kann anstelle eines Sinterverfahrens auch jedes weitere geeignete Verfahren, insbesondere Spritzgießen, zur Herstellung der einteiligen Nebendichtungseinrichtung 5 verwendet werden. Auch können bei allen beschriebenen Ausführungsbeispielen zusätzlich an der Nebendichtung 51 Aufspreizelemente 13 verwendet werden, um eine sicherere Abdichtung der Nebendichtung 51 an dem rohrförmigen Bauteil 8 zu erreichen.

### Bezugszeichenliste

- 2: 1 Gleitringdichtungsanordnung Rotierbarer Gleitring
- 3: Stationärer Gleitring
- 3a: Rückseitiger Bereich
- 4: Dichtspalt
- 5: Nebendichtungseinrichtung
- 6: Druckring
- 6a, 6b, 6c: Teil des Druckrings
- 7: Vorspannelement
- 8: Rohrförmiges Bauteil
- 8a: Mantelabdichtfläche
- 9: Gehäuse
- 10: Druckbereich
- 11: Atmosphärenbereich
- 12: Spalt
- 13: Aufspreizelement
- 14: Sicherungsring
- 15: Stift
- 51: Nebendichtung
- 51a Radial: äußerer Umfang
- 51b: Absatz
- 52: Ringelement
- 52a: Übergreifender Bereich
- 52b: erstes Material
- 52c: zweites Material
- 53: Sinterverbindung
- 54: Einbuchtung
- 55: Vorstehender Bereich
- 60: Ringförmige Ausnehmung
- 61: Axiale Auskragung
- 62: Absatz
- 63: übergreifender Bereich
- 64: hintergreifender Bereich
- X-X: Axialrichtung
- F: Vorspannkraft

## Patentansprüche

1. Gleitringdichtungsanordnung, umfassend:
- einen rotierbaren Gleitring (2),
- einen stationären Gleitring (3) und
- eine Nebendichtungseinrichtung (5),
- wobei die Nebendichtungseinrichtung (5) einstückig ausgebildet ist und eine Nebendichtung (51) und ein Ringelement (52) aus unterschiedlichen Materialien umfasst, und
- wobei das Ringelement (52) an der Nebendichtung (51) an einer zum stationären Gleitring (3) gerichteten Seite angeordnet ist, **gekennzeichnet durch**
- eine Vorspanneinrichtung zur Vorspannung der einstückigen Nebendichtungseinrichtung (5) in Axialrichtung (X-X) umfassend einen Druckring (6) und ein Vorspannelement (7), wobei der Druckring (6) an der Nebendichtung (51) der Nebendichtungseinrichtung (5) anliegt, und
- wobei der Druckring (6) die Nebendichtung (51) der einstückigen Nebendichtungseinrichtung (5) in Axialrichtung (X-X) mittels eines übergreifenden Bereiches (63) teilweise übergreift und/oder mittels einer axialen Auskragung (61) teilweise untergreift und/oder mittels eines hintergreifenden Bereichs (64) oder eines Sicherungsrings (14) hintergreift.

2. Gleitringdichtungsanordnung nach Anspruch 1, **dadurch gekennzeichnet, dass** eine Verbindung (53) zwischen der Nebendichtung (51) und dem Ringelement (52) der einstückigen Nebendichtungseinrichtung (5) mittels thermischer Verfahren, insbesondere als eine Sinterverbindung hergestellt ist und/oder eine Klebeverbindung ist.

3. Gleitringdichtungsanordnung nach einem der vorhergehenden Ansprüche, **dadurch gekennzeichnet, dass** das Ringelement (52) einen in Axialrichtung (X-X) verlaufenden Ringfortsatz (52a) aufweist, welcher die Nebendichtung (51) in Axialrichtung (X-X) zumindest teilweise übergreift.

4. Gleitringdichtungsanordnung nach Anspruch 3, **dadurch gekennzeichnet, dass** das Ringelement (52) die Nebendichtung (51) an einem radial äußersten Bereich übergreift oder dass das Ringelement (52) die Nebendichtung (51) an einem an der Nebendichtung (51) gebildeten Absatz (51b) übergreift.

5. Gleitringdichtungsanordnung nach einem der vorhergehenden Ansprüche, **dadurch gekennzeichnet, dass** die Verbindung (53), am gesamten Kontaktbereich zwischen der Nebendichtung (51) und dem Ringelement (52) vorgesehen ist.

6. Gleitringdichtungsanordnung nach einem der vorhergehenden Ansprüche, **dadurch gekennzeichnet, dass** die Nebendichtung (51) PTFE umfasst und/oder das Ringelement (52) Polyetherketone, insbesondere PEEK, umfasst.

7. Gleitringdichtungsanordnung nach einem der vorhergehenden Ansprüche, ferner umfassend ein rohrförmiges Bauteil (8), an welchem die einstückige Nebendichtungseinrichtung (5) abdichtet.

8. Gleitringdichtungsanordnung nach Anspruch 7, **dadurch gekennzeichnet, dass** das Ringelement (52) in Axialrichtung (X-X) an einer zum rohrförmigen Bauteil (8) gerichteten Seite eine Länge (L1) aufweist und die Nebendichtung (51) in Axialrichtung an einer zum rohrförmigen Bauteil (8) gerichteten Seite eine Länge (L2) aufweist und die Länge (L2) mindestens doppelt so groß wir die Länge (L1) ist.

9. Gleitringdichtungsanordnung nach einem der vorhergehenden Ansprüche, **gekennzeichnet durch** eine formschlüssige Verbindung zwischen der Nebendichtung (51) und dem Druckring (6).

10. Gleitringdichtungsanordnung nach Anspruch 8, **dadurch gekennzeichnet, dass** die Nebendichtung (51) eine Einbuchtung (54) und einen in die Einbuchtung vorstehenden Bereich (55) aufweist und der Druckring (6) eine entsprechend der Form des vorstehenden Bereichs (55) gebildete ringförmige Ausnehmung (60) für die formschlüssige Verbindung aufweist.

11. Gleitringdichtungsanordnung nach einem der vorhergehenden Ansprüche, **dadurch gekennzeichnet, dass** die Gleitringdichtungsanordnung eine Gasdichtung zur Abdichtung eines gasförmigen Mediums ist, oder dass die Gleitringdichtungsanordnung eine Flüssigkeitsdichtung zur Abdichtung eines flüssigen Mediums ist.

## Claims

1. Mechanical seal arrangement, comprising:
- a rotatable slide ring (2),
- a stationary slide ring (3) and
- an auxiliary sealing means (5),
- the auxiliary sealing means (5) being formed in a single piece and comprising an auxiliary seal (51) and a ring element (52) made of different materials, and
- the ring element (52) being arranged on the auxiliary seal (51) on a side facing the stationary slide ring (3), **characterised by**
- a biasing means for biasing the single-piece auxiliary sealing means (5) in the axial direction (X-X), comprising a pressure ring (6) and a biasing element (7), the pressure ring (6) being positioned on the auxiliary seal (51) of the auxiliary sealing means (5), and
- the pressure ring (6), in the axial direction (X-X), engaging over the auxiliary seal (51) of the single-piece auxiliary sealing means (5) in part by means of an overlapping region (63) and/or engaging below it in part by means of a projection (61) and/or engaging behind it by means of a rear engagement region (64) or a fixing ring (14).

2. Mechanical seal arrangement according to claim 1, **characterised in that** a connection (53) between the auxiliary seal (51) and the ring element (52) of the single-piece auxiliary sealing means (5) is produced by thermal methods, in particular as a sintered connection, and/or is an adhesive connection.

3. Mechanical seal arrangement according to either of the preceding claims, **characterised in that** the ring element (52) has a ring extension (52a), extending in the axial direction (X-X), which engages over the auxiliary seal (51) at least in part in the axial direction (X-X).

4. Mechanical seal arrangement according to claim 3, **characterised in that** the ring element (52) engages over the auxiliary seal (51) in a radially outermost region or in that the ring element (52) engages over the auxiliary seal (51) in a ledge (51b) formed on the auxiliary seal (51).

5. Mechanical seal arrangement according to any of the preceding claims, **characterised in that** the connection (53) is provided over the entire contact region between the auxiliary seal (51) and the ring element (52).

6. Mechanical seal arrangement according to any of the preceding claims, **characterised in that** the auxiliary seal (51) comprises PTFE and/or the ring element (52) comprises polyetherketone, in particular PEEK.

7. Mechanical seal arrangement according to any of the preceding claims, further comprising a tubular component (8) at which the single-piece auxiliary sealing means (5) seals.

8. Mechanical seal arrangement according to claim 7, **characterised in that** the ring element (52) is of a length (L1) in the axial direction (X-X) on a side facing the tubular component (8), and the auxiliary seal (51) is of a length (L2) in the axial direction on a side facing the tubular component (8), and the length (L2) is at least twice the length (L1).

9. Mechanical seal arrangement according to any of the preceding claims, **characterised by** a positive connection between the auxiliary seal (51) and the pressure ring (6).

10. Mechanical seal arrangement according to claim 8, **characterised in that** the auxiliary seal (51) has an indentation (54) and a region (55) projecting into the indentation, and the pressure ring (6) has an annular recess (60), formed corresponding to the shape of the projecting region (55), for the positive connection.

11. Mechanical seal arrangement according to any of the preceding claims, **characterised in that** the mechanical seal arrangement is a gas seal for sealing off a gaseous medium, or **in that** the mechanical seal arrangement is a liquid seal for sealing off a liquid medium.

## Revendications

1. Garniture mécanique d'étanchéité, comprenant
- un anneau de glissement rotatif (2),
- un anneau de glissement stationnaire (3)
- et un dispositif d'étanchéité secondaire (5),
- sachant que le dispositif d'étanchéité secondaire (5) est réalisé monobloc et comprend un joint d'étanchéité secondaire (51) et un élément annulaire (52) constitués de matériaux différents,
- et sachant que l'élément annulaire (52) est disposé sur le joint d'étanchéité secondaire (51) sur un côté orienté vers l'anneau de glissement stationnaire(3), **caractérisée par**
- un dispositif de précontrainte pour précontraindre le dispositif d'étanchéité secondaire monobloc (5) en direction axiale (X-X), comprenant un anneau de pression (6) et un élément de précontrainte (7), sachant que l'anneau de pression (6) s'applique contre le joint d'étanchéité secondaire (51) du dispositif d'étanchéité secondaire (5),
- et sachant que l'anneau de pression (6) s'engage partiellement au-dessus du joint d'étanchéité secondaire monobloc (51) en direction axiale (X-W) au moyen d'une région de recouvrement (63), et/ou s'engage partiellement au-dessous au moyen d'une saillie axiale (61), et/ou s'engage derrière au moyen d'une région (64) de prise arrière ou d'un jonc d'arrêt (14).

2. Garniture mécanique d'étanchéité selon la revendication 1, **caractérisée en ce qu'**une liaison (53) entre le joint d'étanchéité secondaire (51) et l'élément annulaire (52) du dispositif d'étanchéité secondaire monobloc (5) est réalisée au moyen d'un procédé thermique, en particulier sous la forme d'une liaison frittée, et/ou est une liaison par collage.

3. Garniture mécanique d'étanchéité selon l'une des revendications précédentes, **caractérisée en ce que** l'élément annulaire (52) présente un prolongement annulaire (52a), s'étendant en direction axiale (X-X), qui s'engage au moins partiellement au-dessus du joint d'étanchéité secondaire (51) en direction axiale (X-X).

4. Garniture mécanique d'étanchéité selon la revendication 3, **caractérisée en ce que** l'élément annulaire (52) s'engage au-dessus du joint d'étanchéité secondaire (51) au niveau d'une région radialement la plus extérieure, ou **en ce que** l'élément annulaire (52) s'engage au-dessus du joint d'étanchéité secondaire (51) au niveau d'un gradin (51b) formé sur le joint d'étanchéité secondaire (51).

5. Garniture mécanique d'étanchéité selon l'une des revendications précédentes, **caractérisée en ce que** la liaison (53) est prévue sur toute la région de contact entre le joint d'étanchéité secondaire (51) et l'élément annulaire (52).

6. Garniture mécanique d'étanchéité selon l'une des revendications précédentes, **caractérisée en ce que** le joint d'étanchéité secondaire (51) comprend du PTFE (polytétrafluoréthylène) et/ou l'élément annulaire (52) comprend du polyéthercétone, en particulier du polyétheréthercétone (PEEK).

7. Garniture mécanique d'étanchéité selon l'une des revendications précédentes, comprenant en outre un élément structurel tubulaire (8) sur lequel le dispositif d'étanchéité secondaire monobloc (5) assure l'étanchéité.

8. Garniture mécanique d'étanchéité selon la revendication 7, **caractérisée en ce que** l'élément annulaire (52) présente en direction axiale (X-X), sur un côté orienté vers l'élément structurel tubulaire (8), une longueur (L1) et le joint d'étanchéité secondaire (51) présente en direction axiale, sur un côté orienté vers l'élément structurel tubulaire (8), une longueur (L2), et la longueur (L2) est au moins égale au double de la longueur (L1).

9. Garniture mécanique d'étanchéité selon l'une des revendications précédentes, **caractérisée par** une liaison positive entre le joint d'étanchéité secondaire (51) et l'anneau de pression (6).

10. Garniture mécanique d'étanchéité selon la revendication 8, **caractérisée en ce que** le joint d'étanchéité secondaire (51) présente un creux (54) et une région (55) faisant saillie dans le creux, et l'anneau de pression (6) présente, pour la liaison positive, un évidement annulaire (60) d'une forme correspondant à celle de la région en saillie (55).

11. Garniture mécanique d'étanchéité selon l'une des revendications précédentes, **caractérisée en ce que** la garniture mécanique d'étanchéité est un joint étanche aux gaz pour l'étanchement d'un milieu gazeux, ou **en ce que** la garniture mécanique d'étanchéité est un joint étanche aux liquides pour l'étanchement d'un milieu liquide.
